# EUROPÄISCHE PATENTSCHRIFT

(11) **EP 3 749 843 B1**
(45) Veröffentlichungstag und Bekanntmachung des Hinweises auf die Patenterteilung: **03.07.2024**
(21) Anmeldenummer: 19703304.6
(22) Anmeldetag: 04.02.2019
(51) Int. Cl.: F01N 3/28

(54) **KATALYSATOR ZUR ABGASBEHANDLUNG**
CATALYTIC CONVERTER FOR EXHAUST GAS TREATMENT
CONVERTISEUR CATALYTIQUE POUR LE TRAITEMENT DES GAZ D'ÉCHAPPEMENT

(30) Priorität: 05.02.2018 DE 102018201738
(43) Veröffentlichungstag der Anmeldung: 16.12.2020
(73) Patentinhaber: Vitesco Technologies GmbH, 93055 Regensburg (DE)
(72) Erfinder: DUNG, Sebastian, 65824 Schwalbach a. Ts. (DE); HIRTH, Peter, 65824 Schwalbach a. Ts. (DE); SCHEPERS, Sven, 65824 Schwalbach a. Ts. (DE)
(74) Vertreter: Vitesco Technologies
(86) Internationale Anmeldenummer: PCT/EP2019/052674
(87) Internationale Veröffentlichungsnummer: WO 2019/149943

(56) Entgegenhaltungen:
- EP-A1- 0 658 390
- EP-A2- 1 557 545
- WO-A1-96/34188
- JP-U- H0 338 142
- US-A1- 2007 033 803

## Beschreibung

### Technisches Gebiet

Die Erfindung betrifft einen Katalysator zur Abgasnachbehandlung, mit einer Matrix und mit einem Mantel, wobei die Matrix aus einem aufgewickelten Lagenstapel aus Metallfolien gebildet ist und in den Mantel eingesetzt ist und mit diesem nur abschnittsweise stoffschlüssig verbunden ist.

### Stand der Technik

Im Stand der Technik sind Katalysatoren zur Abgasnachbehandlung bekannt, die eine metallische Matrix aufweisen, die in einem ebenfalls metallischen Mantel eingesteckt ist und mit dem Mantel durch ein Lötverfahren stoffschlüssig verbunden ist. Die Matrix ist dabei regelmäßig aus einem Lagenstapel erzeugt, der abwechselnd aus glatten und strukturierten Lagen gebildet ist und zur eigentlichen Matrix aufgewickelt wird. Diese aufgewickelte Matrix wird in den metallischen Mantel eingesteckt und mit diesem flächig verlötet.

Nachteilig an Katalysatoren dieser Art ist insbesondere, dass eine besonders flächige Verbindung zwischen dem Mantel und der Matrix erzeugt wird. Dies liegt beispielsweise in der Tatsache begründet, dass es durch das Aufwickeln des Lagenstapels, was zu einem Versatz der Lagen am Mantel von einigen Millimetern führt, zu einer abwechselnden Anlage von glatten und gewellten Lagen am Mantel kommt, wodurch ein besonders hohe Anlagefläche erzeugt wird.

Die JP H03 38142 U offenbart einen Katalysator zur Abgasnachbehandlung, mit einer in einem Mantel aufgenommenen Matrix, wobei die Matrix nur abschnittsweise mit dem Mantel verbunden ist.

Die EP 0 658 390 A offenbart einen Metallträger für einen Abgasreinigungskatalysator für Automobile, Motorräder und Industrieanlagen sowie ein Verfahren zu dessen Herstellung.

Die EP 1 557 545 A offenbart einen metallischen Katalysator zur Behandlung von Gasen und ein Verfahren zu dessen Herstellung.

Die WO 96/34188 A offenbart eine Trägeranordnung für Katalysatoren mit einem Katalysatorkörper, der aus einem Monolithen, der aus Trägerelementen gebildet ist, die dazu bestimmt sind, ein katalytisches Material zu tragen. Der Monolith ist von einem Metallgehäuse umschlossen. Die innere Breite des Gehäuses ist größer als die des Monolithen, wodurch sich ein Spalt zwischen dem Gehäuse und dem Monolithen bildet. Dieser Spalt ist zumindest im Bereich eines um den Monolithen umlaufenden Abschnitts überbrückt, wobei der Monolith an dem Gehäuse befestigt ist.

Dies ist zwar grundsätzlich vorteilhaft, da eine besonders stabile Anbindung erzeugt wird. Nachteilig daran ist jedoch, dass die Anbindung wenig Flexibilität aufweist, und dies insbesondere nachteilig ist, wenn es darum geht thermisch induzierte Differenzdehnungen aufzunehmen und zu kompensieren. Dies kann insbesondere bei Belastungen infolge starker Temperaturschwankungen zu einem Versagen der randnahen Lagen führen. Weiterhin kommt es bei den derzeit angewandten Verfahren zur Aufbringung des Lotes auf den Mantel beim Einschieben der Matrix auch ungewollt zur Belotung von Bereichen, die gar nicht stoffschlüssig an den Mantel angebunden werden sollen.

### Darstellung der Erfindung, Aufgabe, Lösung, Vorteile

Daher ist es die Aufgabe der vorliegenden Erfindung einen Katalysator zu schaffen, der eine Verbindung zwischen dem Mantel und der Matrix aufweist, die eine strukturierte Kontaktstelle zwischen Mantel und Matrix herstellt, welche eine ausreichend hohe Flexibilität gegenüber thermisch induzierten Dehnungen aufweist. Weiterhin ist es die Aufgabe ein Verfahren zur Erzeugung eines solchen Katalysators zu schaffen.

Die Aufgabe hinsichtlich des Katalysators wird durch einen Katalysator mit den Merkmalen von Anspruch 1 gelöst.

Ein Ausführungsbeispiel der Erfindung betrifft einen Katalysator zur Abgasnachbehandlung, mit einer Matrix und mit einem Mantel, wobei die Matrix aus einem aufgewickelten Lagenstapel aus Metallfolien gebildet ist und in den Mantel eingesetzt ist und mit diesem nur abschnittsweise stoffschlüssig verbunden ist, wobei der Mantel in axialer Richtung und/oder in Umfangsrichtung radial nach innen gerichtete Ausformungen aufweist, wobei die radial nach innen gerichteten Flächen der Ausformungen die Kontaktpunkte zwischen der Matrix und dem Mantel bilden, wobei die Ausformungen als langlochartige oder kreisförmige Dellen ausgeformt sind, welche im Bereich der Kontaktpunkte einen äquivalententen Durchmesser von 2mm bis 20mm aufweisen.

Mit nur abschnittsweise ist gemeint, dass der Mantel mit der Matrix nicht entlang der gesamten axialen Erstreckung und nicht über den gesamten Umfang stoffschlüssig verbunden ist. Insbesondere ist damit gemeint, dass es abschnittsweise in axialer Richtung und/oder in Umfangsrichtung verteilt Verbindungsbereiche gibt, die von Bereichen unterbrochen sind, in denen keine stoffschlüssige Verbindung zwischen dem Mantel und der Matrix besteht. Solche Verbindungsbereiche und nicht verbundenen Bereiche können beispielsweise durch eine strukturierte Oberfläche des Mantels und/oder der Matrix erzeugt werden.

Ausformungen können beispielsweise Dellen sein, die von außen in den Mantel eingeprägt wurden. Auf der Innenfläche des Mantels ergeben sich dabei Vorsprünge, die über die restliche Innenfläche des Mantels hinausstehen. Nur an diesen Vorsprüngen wird letztlich eine stoffschlüssige Verbindung zwischen dem Mantel und der Matrix erzeugt. Die Dellen können beispielsweise rund, oval, eckig oder als Mischform ausgeführt sein. Bevorzugt sind die Dellen beziehungsweise die dadurch erzeugten Vorsprünge entlang der gesamten axialen Erstreckung des Mantels verteilt und ebenfalls vollständig umlaufend in Umfangsrichtung, um eine entlang des Mantels gleichmäßige Verbindung zwischen der Matrix und dem Mantel zu erzeugen.

Die Ausformungen weisen bevorzugt einen Durchmesser von 2mm bis 20mm auf, da dadurch eine ausreichende Kontaktfläche für die Verbindung zwischen Mantel und Matrix geschaffen werden kann und gleichzeitig noch ausreichend nicht direkt verbundene Bereiche zwischen Matrix und Mantel übrigbleiben, damit eine ausreichend hohe Flexibilität gegenüber thermisch induzierten Spannungen erreicht wird.

Ein bevorzugtes Ausführungsbeispiel ist dadurch gekennzeichnet, dass die Ausformungen einen Abstand in axialer Richtung und/oder in Umfangsrichtung von 0mm bis 25mm aufweisen. Ein Muster mit diesen Abständen ist vorteilhaft, um eine ausreichend hohe Festigkeit an den Verbindungspunkten zu erzeugen und gleichzeitig eine ausreichend hohe Flexibilität zu ermöglichen. Auch ist es zu bevorzugen, wenn die Ausformungen eine Tiefe in radialer Richtung des Mantels von 0, 1mm bis 5mm aufweisen. Versuche haben gezeigt, dass die Tiefe in radialer Richtung im angegebenen Bereich ausreichend ist um eine stoffschlüssige Verbindung nur an den tatsächlichen Kontaktstellen zu erzeugen. Bei einer zu geringen Tiefenerstreckung in radialer Richtung kann es unbeabsichtigt doch zu einer stoffschlüssigen Verbindung zwischen dem Mantel und der Matrix kommen durch Lotmaterial außerhalb der Kontaktstellen.

Darüber hinaus ist es vorteilhaft, wenn der Mantel in axialer Richtung zueinander beabstandete und in Umfangsrichtung zumindest teilweise umlaufende Sicken aufweist. Die Sicken können in Umfangsrichtung vollständig umlaufend ausgeführt sein oder alternativ sich nur über einen Teilabschnitt in Umfangsrichtung erstrecken. Vorteilhaft können die sich nur über einen Teilabschnitt in Umfangsrichtung erstreckenden Sicken auch in Umfangsrichtung zueinander versetzt zur in axialer Richtung benachbarten nächsten Sicke angeordnet sein. Auf diese Weise kann eine sowohl in Umfangsrichtung als auch in axialer Richtung zueinander versetzte Verbindung geschaffen werden, wodurch thermisch induzierte Spannungen besser über den Mantel verteilt werden können.

Auch ist es vorsehbar, dass mehrere sich in Umfangsrichtung nur über einen Teilabschnitt erstreckende Sicken auf einer Umfangslinie beabstandet zueinander angeordnet sind. Beispielsweise können sich die einzelnen Sicken über einen Bogenabschnitt von jeweils 100 Grad erstrecken und beabstandet zueinander angeordnet sein. Alternativ können auch mehr oder weniger Sicken auf einer Umfangslinie verteilt sein. Auch die Länge des Bogenabschnitts kann größer oder kleiner sein.

Weiterhin ist es vorteilhaft, wenn die radial nach innen gerichteten Flächen der Sicken die Kontaktpunkte zur Matrix bilden. Dies ist vorteilhaft, um nur an den Stellen, an denen die Sicken angeordnet sind eine Verbindung zwischen der Matrix und dem Mantel zu erzeugen.

Auch ist es zweckmäßig, wenn der Mantel an seiner radial nach innen gerichteten Fläche Lotpunkte aufweist, die in axialer Richtung und in Umfangsrichtung in regelmäßigen oder unregelmäßigen Abständen zueinander angeordnet sind. Dies ist vorteilhaft, da auch bei einem ansonsten glatten Mantel, der insbesondere keine Verformungen in radialer Richtung nach innen aufweist, punktuelle Verbindungen zwischen dem Mantel und der Matrix erzeugt werden können. Die Lotpunkte erzeugen bevorzugt ein Lotmuster, welches sich vollständig in Umfangsrichtung und entlang der axialen Erstreckung verteilt. Dabei bilden die Lotpunkte die späteren Verbindungsstellen zwischen Mantel und Matrix aus, während zwischen den nicht beloteten Bereichen des Mantels und der Matrix keine stoffschlüssige Verbindung erzeugt wird. Auf diese Weise kann eine ausreichende Flexibilität zwischen Mantel und Matrix erzeugt werden.

Darüber hinaus ist es vorteilhaft, wenn die Fläche eines Lotpunktes zwischen 10mm² und 700mm² groß ist. Weiterhin ist es zweckmäßig, wenn die Lotpunkte kreisrund ausgebildet sind und einen Durchmesser zwischen 5mm und 30mm aufweisen, besonders bevorzugt zwischen 7mm und 20mm. Die Größe ist vorteilhaft, um eine ausreichend starke Verbindung zu erzeugen.

Besonders vorteilhaft ist es, wenn der Abstand zwischen zwei Lotpunkten in axialer Richtung des Mantels zwischen 5mm und 40mm, besonders bevorzugt zwischen 20mm und 30mm beträgt. Auch ist es weiterhin vorteilhaft, wenn der Abstand zwischen zwei Lotpunkten in Umfangsrichtung zwischen 5mm und 30mm, besonders bevorzugt zwischen 15mm und 20mm beträgt. Eine solche Beabstandung ist vorteilhaft, um eine ausreichend enges Netz an Lotpunkten zu erzeugen, während gleichzeitig genügend unverbundene Flächen erhalten bleiben, um die gewünschte Flexibilität zwischen Mantel und Matrix sicherzustellen.

Weiterhin ist es zweckmäßig, wenn die Matrix ausschließlich aus gewellten Lagen gebildet ist. Durch eine Matrix aus nur gewellten Lagen, kann erreicht werden, dass auch nur zwischen den Wellenbergen und dem Mantel ein physischer Kontakt besteht und somit auch nur dort eine stoffschlüssige Verbindung erzeugt wird. Die Aufgabe hinsichtlich des Verfahrens wird durch ein Verfahren mit den Merkmalen von Anspruch 14 gelöst.

Ein Ausführungsbeispiel der Erfindung betrifft ein Verfahren zur Herstellung eines Katalysators, wobei die folgenden Verfahrensschritte nacheinander angewendet werden:
▪ Erzeugen einer Matrix durch das Aufeinanderstapeln und Aufwickeln mehrere metallischer Lagen,
▪ Auftragen des zum Verlöten genutzten Lotes an der radial nach innen gerichteten Fläche des Mantels,
▪ Einführen der Matrix in den Mantel, und
▪ Verlöten der Matrix mit dem Mantel,
wobei eine Leimwalze zum Auftragen eines Haftmittels auf den Mantel verwendet wird, wobei die Leimwalze an ihrer radial nach außen gerichteten Fläche Erhebungen aufweist, mit welchen die Leimwalze auf der radial nach innen gerichteten Fläche des Mantels abgerollt wird, wobei das Haftmittel entsprechend der Anordnung der Erhebungen auf den Mantel aufgetragen wird.

Die Leimwalze ist bevorzugt aus einem Zellkautschuk gefertigt und ist saugfähig, so dass sie ein Haftmittel aufnehmen kann. Durch die Erhebungen ist sichergestellt, dass nur in diesem Bereich die Leimwalze auf der Innenfläche des Mantels abrollt und so nach dem Prinzip des Kartoffeldrucks auch nur an diesen Kontaktstellen das Haftmittel auf den Mantel aufgetragen wird. Die Leimwalze bildet somit praktisch ein Negativ des Lotmusters.

Vorteilhafte Weiterbildungen der vorliegenden Erfindung sind in den Unteransprüchen und in der nachfolgenden Figurenbeschreibung beschrieben.

### Kurze Beschreibung der Zeichnungen

Im Folgenden wird die Erfindung anhand von Ausführungsbeispielen unter Bezugnahme auf die Zeichnungen detailliert erläutert. In den Zeichnungen zeigen:
- Fig. 1: zwei perspektivische Teilansichten jeweils einer Matrix in einem Mantel,
- Fig. 2: eine schematische Ansicht eines Mantels mit in Umfangsrichtung verlaufenden Sicken,
- Fig. 3: zwei Schnitte durch Mäntel mit in Umfangsrichtung verlaufenden Sicken,
- Fig. 4: eine Teilansicht eines Mantels, der an seiner Innenfläche ein Muster aus Lotpunkten aufweist,
- Fig. 5: im linken Bereich eine Leimwalze zur Erzeugung eine Lotpunktmusters auf der Innenseite des Mantels und im rechten Bereich einen Mantel mit einem durch die Leimwalze erzeugten Lotpunktmuster,
- Fig. 6: Schnittansichten durch zwei Mäntel mit in Umfangsrichtung umlaufenden Sicken, wobei die angedeutete Matrix lediglich aus gewellten Lagen gebildet ist,
- Fig. 7: eine Schnittansicht durch einen Katalysator mit einer rautenförmigen Struktur, die in den Mantel eingeprägt ist,
- Fig. 8: eine Schnittansicht durch einen Katalysator mit einer rautenförmigen Struktur, die in den Mantel eingeprägt ist, und
- Fig. 9: eine Schnittansicht mit einer wabenförmigen Struktur, die in den Mantel eingeprägt ist.

### Bevorzugte Ausführung der Erfindung

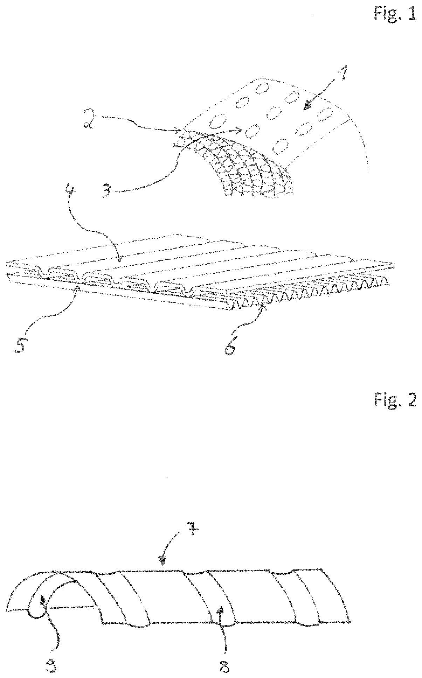

Die Figur 1 zeigt im oberen Bereich einen Mantel 1, in welchen eine Matrix 2 eingesteckt ist. Der Mantel 1 weist eine Mehrzahl von Vertiefungen 3 auf, die Dellen im Mantel 1 ausbilden. Diese Dellen 3 können beispielsweise in den Mantel 1 eingeprägt werden. Die Matrix 2 ist aus einem Lagenstapel durch Aufwickeln gebildet, der abwechselnd aus einer glatten und einer gewellten Lage gebildet ist. Alternativ kann die Matrix auch ausschließlich aus gewellten Lagen gebildet sein, die mit einem Winkel zueinander versetzt aufeinandergestapelt sind. Bevorzugt ist der Versatzwinkel zwischen 3° und 10°.

Durch die Dellen 3, die im oberen Beispiel der Figur 1 langlochartig ausgeformt sind, wird ein Kontakt zwischen den äußeren Lagen der Matrix und dem Mantel nur bereichsweise hergestellt. Dementsprechend wird bei einer Verlötung auch nur an diesen Kontaktbereichen eine stoffschlüssige Verbindung erzeugt. Alternativ zur gezeigten langlochartigen Ausführung, können die Dellen beispielsweise auch kreisförmig sein.

Im unteren Teil der Figur 1 ist ein Mantel 4 angedeutet, der schlitzförmige Vertiefungen 5 aufweist. Auch hier besteht nur an den Vertiefungen einen Kontakt zwischen der Matrix 6 und dem Mantel 4, so dass eine stoffschlüssige Verbindung auch nur an diesen Kontaktbereichen erzeugt wird.

Die Figur 2 zeigt einen Teilabschnitt eines Mantels 7, der zumindest teilweise in Umfangsrichtung umlaufende und in axialer Richtung zueinander beabstandete Sicken 8 aufweist. Die Sicken 8, beziehungsweise die radial nach innen gerichteten tiefsten Stellen 9 der Sicken 8 bilden die Kontaktbereiche zur nicht gezeigten Matrix.

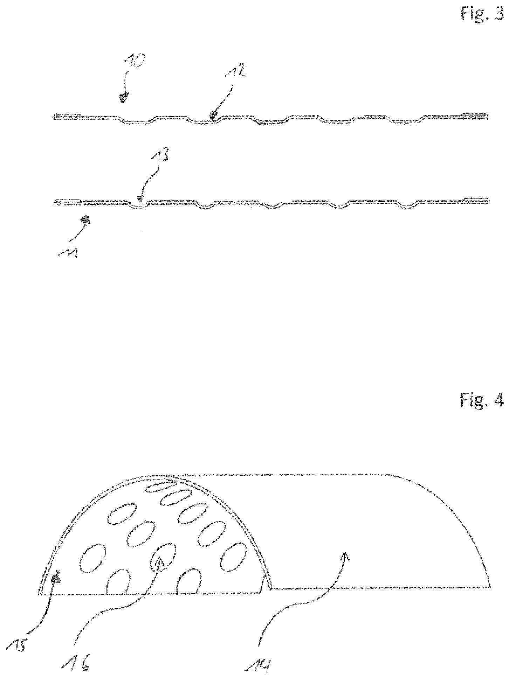

Die Figur 3 zeigt zwei Schnitte durch unterschiedliche Mäntel 10, 11, wobei die Mäntel 10, 11 jeweils mehrere in Umfangsrichtung umlaufende und in axialer Richtung zueinander beabstandete Sicken 12, 13 aufweisen. Auch hier bilden jeweils die radial nach innen gerichteten Flächen der Sicken 12, 13 die Kontaktbereiche aus, die zur Verbindung mit der jeweiligen Matrix genutzt werden. Figur 4 zeigt eine Teilansicht eines Mantels 14, wobei an der radial nach innen gerichteten Fläche 15 mehre Lotpunkte 16 in Form eine Lotpunktmusters aufgetragen sind. Die Lotpunkte sind dabei durch das punktuelle Aufbringen eines Haftmittels auf den Mantel und das anschließende Beaufschlagen mit dem Lotmittel erzeugt.

Nur an den Stellen, die mit dem Lot beaufschlagt sind, kann beim Lötvorgang eine Verbindung zwischen dem Mantel 14 und der nicht gezeigten Matrix erzeugt werden.

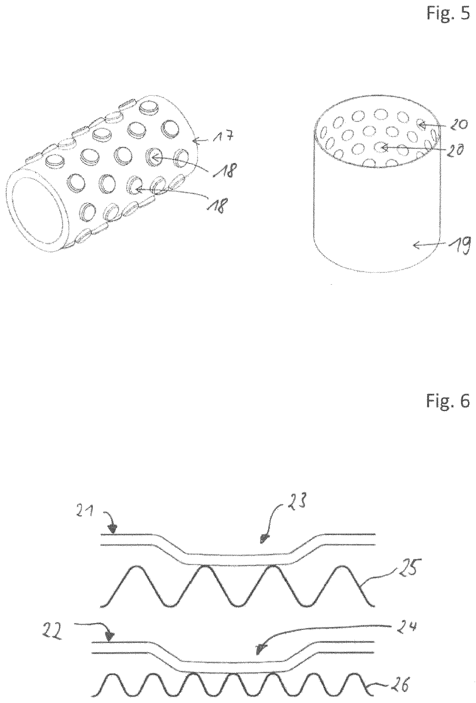

Figur 5 zeigt im linken Teil eine Leimwalze 17, die über ihren Umfang verteilt mehrere Erhebungen 18 aufweist. Die Leimwalze ist bevorzugt aus einem saugfähigen Material, beispielsweise einem geschäumten Material, gefertigt und dient dem Auftragen eines Haftmittels auf die Innenfläche eines Mantels. Durch die Ausformung und Anordnung der Erhebungen 18 kann das im Mantel erzeugte Lotpunktmuster bestimmt werden. Der Übertrag des Haftmittels auf den Mantel erfolgt dabei ähnlich einem Druckverfahren. Nur an den mit Haftmittel beaufschlagten Bereichen lagert sich in einem nachfolgenden Schritt das Lot ab, welches später im Lötvorgang die stoffschlüssige Verbindung erzeugt.

Im rechten Teil der Figur ist ein Mantel 19 dargestellt, in welchem mit der links gezeigten Leimwalze 17 ein Lotpunktmuster 20 erzeugt wurde. Das Lotpunktmuster 20 wird dabei durch ein Abrollen der Leimwalze 17 auf der Innenfläche des Mantels 19 erzeugt.

Figur 6 zeigt zwei Schnittsichten durch jeweils einen Mantel 21 und 22. Die Mäntel 21, 22 weisen jeweils in Umfangsrichtung verlaufende Sicken 23, 24 auf. In den Beispielen der Figur 6 ist die angedeutete Matrix 25, 26 jeweils nur aus gewellten Lagen gebildet, so dass über die gesamte Erstreckung des Mantels 21, 22 jeweils maximal die Wellenberge der gewellten Lagen anliegen, wodurch eine ausreichend hohe Flexibilität in der Verbindung zwischen Mantel 21, 22 und Matrix erreicht wird. Durch die Sicken 23, 24 liegen die Wellenberge der gewellten Lagen sogar nur im Bereich der Sicken 23, 24 am Mantel 21, 22 an, wodurch die Verbindungsstellen weiter reduziert sind und eine noch höhere Flexibilität geschaffen wird.

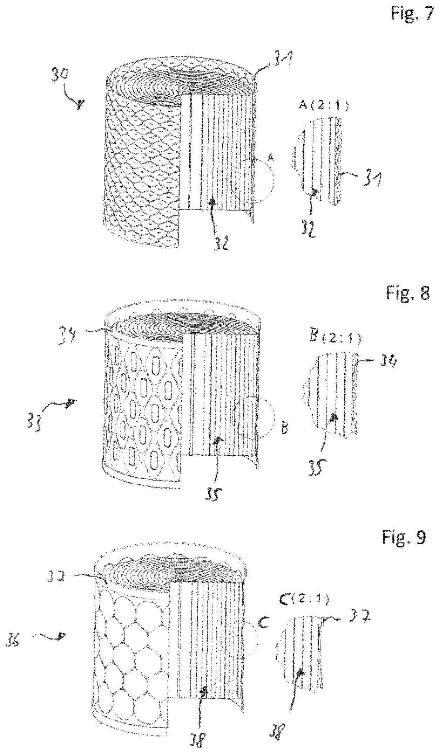

Figur 7 zeigt eine Schnittansicht durch einen erfindungsgemäßen Katalysator 30, wobei in etwa ein Viertel des Katalysators 30 herausgeschnitten ist, um einen Blick auf die im Mantel 31 angeordnete Matrix 32 zu ermöglichen.

Die Matrix 32 ist aus mehreren metallischen Lagen gebildet, die aufeinandergestapelt sind und zur fertigen Matrix 32 aufgewickelt wurden.

Der Mantel 31 weist eine rautenförmige Struktur auf, die beispielsweise von außen in diesen eingeprägt wurde. Durch die rautenförmigen Einprägungen werden an der Innenfläche des Mantels 31 hervorstehende Strukturen erzeugt, die radial nach Innen von dem Mantel 31 abragen. Diese abragenden Strukturen dienen als Kontaktpunkte zwischen dem Mantel 31 und der Matrix 32. Nur an diesen Kontaktpunkten wird beim anschließenden Lötvorgang eine stoffschlüssige Verbindung zwischen dem Mantel 31 und der Matrix 32 erreicht.

Im rechten Teil der Figur 7 ist der mit dem Bezugszeichen A bezeichnete Abschnitt des Katalysators 30 in vergrößerter Form dargestellt. In dieser Vergrößerung sind die an der Matrix 32 anliegenden Kontaktpunkte des Mantels 31 zu erkennen.

Figur 8 zeigt einen Katalysator 33 mit einer alternativen rautenförmigen Prägung. Die einzelnen Rauten sind größer und weisen im Vergleich zur Figur 7 eine abweichende Orientierung auf. Die durch die eingeprägte Struktur erzeugten Kontaktpunkt weisen eine größere räumliche Ausdehnung auf, so dass die Anlagefläche zwischen dem Mantel 34 und der Matrix 35 größer ist als im Beispiel der Figur 7 . Die Anzahl der Kontaktpunkte zwischen dem Mantel 34 und der Matrix 35 ist dafür bei gleicher Größe des Katalysators geringer.

Im rechten Teil der Figur 8 ist in der vergrößerten Darstellung des mit dem Bezugszeichen B benannten Abschnitts zu erkennen, dass die Kotaktpunkte großflächiger ausgebildet sind und folglich über eine größere Fläche an der Matrix 35 anliegen. Figur 9 zeigt einen weiteren Katalysator 36 mit einem Mantel 37 der eine wabenförmige aufgeprägte Struktur aufweist. Die einzelnen Waben grenzen direkt aneinander an und erzeugen ebenfalls radial nach innen von dem Mantel 37 abragende Strukturen, die als Kontaktpunkte zur Matrix 38 dienen.

Wie in den Figuren 7 bis 9 zu sehen ist, kann die in den Mantel eingeprägte oder über einen anderen Umformprozess erzeugte Struktur unterschiedliche geometrische Ausprägungen aufweisen. Wesentlich und allen Ausführungsformen gleich ist, dass radial nach innen abragende Strukturen geschaffen werden, die Kontaktpunkte zur Matrix bilden. Dabei ist die durch die Kontaktpunkte gebildete Anlagefläche deutlich kleiner als die gesamte innere Mantelfläche. Dadurch wird sichergestellt, dass trotz einer dauerhaltbaren Verbindung ausreichend nicht verbundene Bereiche zwischen Mantel und Matrix gibt, so dass thermisch induzierte Spannungen zerstörungsfrei aufgenommen werden können.

Die unterschiedlichen Merkmale der einzelnen Ausführungsbeispiele können, im Rahmen der Ansprüche, auch untereinander kombiniert werden. Die Ausführungsbeispiele der Figuren 1 bis 9 weisen insbesondere keinen beschränkenden Charakter auf und dienen der Verdeutlichung des Erfindungsgedankens.

## Patentansprüche

1. Katalysator zur Abgasnachbehandlung, mit einer Matrix (2) und mit einem Mantel (1), wobei die Matrix (2) aus einem aufgewickelten Lagenstapel aus Metallfolien gebildet ist und in den Mantel (1) eingesetzt ist und mit diesem nur abschnittsweise stoffschlüssig verbunden ist, wobei der Mantel (1) in axialer Richtung und/oder in Umfangsrichtung radial nach innen gerichtete Ausformungen (3) aufweist, wobei die radial nach innen gerichteten Flächen der Ausformungen (3) die Kontaktpunkte zwischen der Matrix (2) und dem Mantel (1) bilden, **dadurch gekennzeichnet, dass** die Ausformungen (3) als langlochartige oder kreisförmige Dellen ausgeformt sind, welche im Bereich der Kontaktpunkte einen äquivalenten Durchmesser von 2mm bis 20mm aufweisen.

2. Katalysator nach Anspruch 1, **dadurch gekennzeichnet, dass** die Ausformungen (3) einen Abstand in axialer Richtung und/oder in Umfangsrichtung von 0mm bis 25mm aufweisen.

3. Katalysator nach einem der vorhergehenden Ansprüche, **dadurch gekennzeichnet, dass** die Ausformungen (3) eine Tiefe in radialer Richtung des Mantels (1) von 0,1mm bis 5mm aufweisen.

## Claims

1. Catalytic converter for exhaust gas aftertreatment, with a matrix (2) and with a casing (1), wherein the matrix (2) is formed from a coiled layered stack of metal sheets and is inserted into the casing (1) and is connected thereto in a materially integral manner only in portions, wherein the casing (1) has protrusions (3) pointing radially inwardly in the axial direction and/or in the circumferential direction, wherein the radially inwardly pointing faces of the protrusions (3) form the contact points between the matrix (2) and the casing (1), **characterized in that** the protrusions (3) are shaped as slot-type or circular dents which in the region of the contact points have an equivalent diameter of 2 mm to 20 mm.

2. Catalytic converter according to Claim 1, **characterized in that** the protrusions (3) have a spacing of 0 mm to 25 mm in the axial direction and/or in the circumferential direction.

3. Catalytic converter according to one of the preceding claims, **characterized in that** the protrusions (3) have a depth of 0.1 mm to 5 mm in the radial direction of the casing (1).

## Revendications

1. Catalyseur pour le post-traitement de gaz d'échappement, avec une matrice (2) et avec une enveloppe (1), la matrice (2) étant formée d'un empilement de couches enroulées de feuilles métalliques et étant insérée dans l'enveloppe (1) et n'étant reliée à celle-ci que par sections par liaison de matière, l'enveloppe (1) présentant des formations (3) orientées radialement vers l'intérieur dans la direction axiale et/ou dans la direction périphérique, les surfaces des formations (3) orientées radialement vers l'intérieur formant les points de contact entre la matrice (2) et l'enveloppe (1), **caractérisé en ce que** les formations (3) sont réalisées sous la forme de creux de type trous oblongs ou de forme circulaire, qui présentent un diamètre équivalent de 2 mm à 20 mm dans la zone des points de contact.

2. Catalyseur selon la revendication 1, **caractérisé en ce que** les formations (3) présentent une distance dans la direction axiale et/ou dans la direction périphérique de 0 mm à 25 mm.

3. Catalyseur selon l'une quelconque des revendications précédentes, **caractérisé en ce que** les formations (3) présentent une profondeur dans la direction radiale de l'enveloppe (1) de 0,1 mm à 5 mm.
